# EUROPEAN PATENT APPLICATION

(11) **EP 4 778 718 A1**
(43) Date of publication of application: **22.07.2026**
(21) Application number: 23952292.3
(22) Date of filing: 15.09.2023
(51) Int. Cl.: B32B 27/00, B32B 27/18, B32B 27/30, C08K 5/3492

(54) **DECORATIVE SHEET AND DECORATIVE MEMBER**

(71) Applicant: Dai Nippon Printing Co., Ltd., Tokyo 162-8001 (JP)
(72) Inventor: FURUTA, Satoshi, Tokyo 162-8001 (JP); SUGITA, Natsuo, Tokyo 162-8001 (JP)
(74) Representative: Beck Greener LLP
(86) International application number: PCT/JP2023/033717
(87) International publication number: WO 2025/057403

(57) **Abstract**

The present disclosure provides a decorative sheet comprising a substrate layer, a weatherproof layer and a surface protective layer, in this order in a thickness direction, wherein the substrate layer includes a vinyl chloride based resin; the weatherproof layer includes a (meth)acrylic based resin and a triazine based ultraviolet absorber, and a thickness thereof is 30 µm or more; and the surface protective layer includes a triazine based ultraviolet absorber.

## Description

### Technical Field

The present disclosure relates to a decorative sheet and a decorative member.

### Background Art

As an interior member or an exterior member used for construction materials, for example, a decorative member including a base member and a decorative sheet is known. Various resins are used for the substrate layers of decorative sheets. In particular, decorative sheets using a substrate layer including vinyl chloride based resin have excellent processability when disposing on a base member. Various decorative sheets using a substrate layer including vinyl chloride based resin have been conventionally proposed (for example, Patent Documents 1 to 3).

### Citation List

### Patent Documents

Patent Document 1: Japanese Patent Application Laid-Open (JP-A) No. 2021-154669
Patent Document 2: JP-A No. 2020-055290
Patent Document 3: JP-A No. 2020-163576

### Summary of Disclosure

### Technical Problem

In order to suppress discolorment over time, good weatherability is required for the decorative sheets using a substrate layer including vinyl chloride based resin. Particularly, for exterior members (decorative members for exterior), excellent weatherability is required for the decorative sheets using a substrate layer including vinyl chloride based resin.

The present disclosure has been made in view of the above circumstances, and an object of the present disclosure is to provide a decorative sheet having excellent weatherability.

### Solution to Problem

The present disclosure provides a decorative sheet comprising a substrate layer, a design layer, a weatherproof layer and a surface protective layer, in this order in a thickness direction, wherein the substrate layer includes a vinyl chloride based resin; the weatherproof layer includes a (meth)acrylic based resin and a triazine based ultraviolet absorber, and a thickness thereof is 30 µm or more; and the surface protective layer includes a triazine based ultraviolet absorber.

The present disclosure provides a decorative member comprising: a base member; and the decorative sheet described above.

### Advantageous Effects of Disclosure

The present disclosure exhibits effects that a decorative sheet having excellent weatherability can be provided.

### Brief Description of Drawings

[FIG. 1] is a schematic cross-sectional view exemplifying a decorative sheet in the present disclosure.
[FIG. 2] is a schematic cross-sectional view exemplifying a decorative sheet in the present disclosure.

### Description of Embodiments

Embodiments are hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure.

In the present descriptions, in expressing an aspect wherein some member is disposed on the other member, when described as merely "on" or "below", unless otherwise stated, it includes both of the following cases: a case wherein some member is disposed directly on or directly below the other member so as to be in contact with the other member, and a case wherein some member is disposed on the upper side or the lower side of the other member via yet another member. Also, in the present descriptions, on the occasion of expressing an aspect wherein some member is disposed on the surface of the other member, when described as merely "on the surface", unless otherwise stated, it includes both of the following cases: a case wherein some member is disposed directly on or directly below the other member so as to be in contact with the other member, and a case wherein some member is disposed on the upper side or the lower side of the other member via yet another member.

### A. Decorative sheet

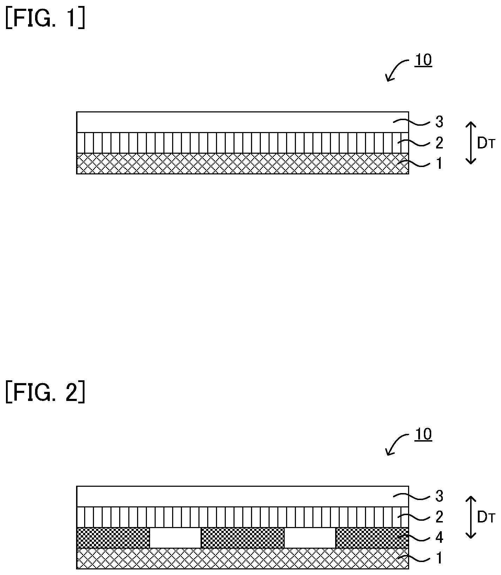

FIG. 1 and FIG. 2 are schematic cross-sectional views exemplifying the decorative sheet in the present disclosure. The decorative sheet 10 shown in FIG. 1 includes a substrate layer 1, a weatherproof layer 2 and a surface protective layer 3 in this order, in a thickness direction D_{T}. The substrate layer 1 includes a vinyl chloride based resin; the weatherproof layer 2 includes a (meth)acrylic based resin and a triazine based ultraviolet absorber; and the surface protective layer 3 includes the triazine based ultraviolet absorber. Also, the thickness of the weatherproof layer 2 is 30 µm or more. Also, the decorative sheet 10 shown in FIG. 2 includes a substrate layer 1, a design layer 4, a weatherproof layer 2 and a surface protective layer 3 in this order, in a thickness direction D_{T},
According to the present disclosure, by providing a specific weatherproof layer and a specific surface protective layer, a decorative sheet having excellent weatherability can be obtained even when the substrate layer includes vinyl chloride based resin. As described above, decorative sheets using a substrate layer including vinyl chloride based resin have an advantage that the processability when disposing on a base member is excellent. Meanwhile, in order to suppress discolorment over time, good weatherability is required for the decorative sheets using a substrate layer including vinyl chloride based resin. Particularly, for exterior members (decorative members for exterior), excellent weatherability is required for the decorative sheets using a substrate layer including vinyl chloride based resin. Specifically, since exterior members are exposed to environments likely to be irradiated with sunlight and environments involving large temperature variation, the vinyl chloride based resins tend to discolor more easily than interior members. In view of the above point, excellent weatherability is required for the decorative sheets using a substrate layer including vinyl chloride based resin.

The inventors of the present disclosure have studied about providing a weatherproof layer, including triazine based ultraviolet absorber having high ultraviolet absorption ability, between the substrate layer including vinyl chloride based resin and the surface protective layer. Here, by using vinyl chloride based resin as the resin used the weatherproof layer, as similar to the substrate layer, there is an advantage that it is easy to obtain a decorative sheet having excellent processability when disposing on a base member. Meanwhile, as a result of detailed studies about the decorative sheets using a weatherproof layer including vinyl chloride based resin, the inventors of the present disclosure have found out that the weatherability can further be improved. Thus, the inventors of the present disclosure have carried out intensive studies about the improvement of the weatherability, and they were able to improve the weatherability of the decorative sheet when they employ (meth)acrylic based resin as the resin constituting the weatherproof layer, and further setting the thickness of the weatherproof layer in a predetermined range or more. Also, by setting the thickness of the weatherproof layer in the predetermined range, a weatherproof layer having excellent processability was obtained, similarly as the case using vinyl chloride based resin, even when (meth)acrylic based resin was used.

Further, since the surface protective layer in the present disclosure includes a triazine based ultraviolet absorber, a decorative sheet having excellent weatherability can be obtained, in view of this point. Also, since both the surface protective layer and weatherproof layer include the triazine based ultraviolet absorber, the proportion of the triazine based ultraviolet absorber in the surface protective layer can be made relatively low. As a result, while improving the weatherability of the decorative sheet, the deterioration of the surface properties required for the surface protective layer (for example, antifouling property) can be suppressed. Also, for example, a case wherein a surface protective layer is formed by using ionizing radiation curable resin on the weatherproof layer, is assumed. When the weatherproof layer includes vinyl chloride based resin, ionizing radiation (such as electron beam irradiation, ultraviolet ray irradiation) may cause a dechlorination reaction (discolorment) in the vinyl chloride based resin included in the weatherproof layer. In contrast to this, when the weatherproof layer includes (meth)acrylic based resin, dechlorination reaction does not occur in (meth)acrylic based resin so that deterioration of the weatherproof layer can be suppressed when the surface protective layer is formed.

### 1. Weatherproof layer

The weatherproof layer in the present disclosure is disposed between the substrate layer and the surface protective layer, and includes a (meth)acrylic based resin and a triazine based ultraviolet absorber. The (meth)acrylic means acrylic or methacrylic.

### (1) (Meth)acrylic based resin

The weatherproof layer in the present disclosure includes a (meth)acrylic based resin. Examples of the (meth)acrylic based resin may include polymethyl(meth)acrylate, polyethyl(meth)acrylate, polybutyl(meth)acrylate, methyl(meth)acrylate-butyl(meth)acrylate copolymer, methyl(meth)acrylate-styrene copolymer, methyl(meth)acrylate-butyl(meth)acrylate-2-hydroxyethyl(meth)acrylate copolymer, and methyl(meth)acrylate-butyl(meth)acrylate-2-hydroxyethyl(meth)acrylate-styrene copolymer. Among them, polymethyl(meth)acrylate and polybutyl(meth)acrylate are preferable.

As the resin, the weatherproof layer may include only the (meth)acrylic based resin, and may further include other resins different from the (meth)acrylic based resin. Examples of the other resin may include olefine based resins. The weatherproof layer preferably includes the (meth)acrylic based resin as a main component of resin. The ratio of the (meth)acrylic based resin, with respect to all the resins in the weatherproof layer is, for example, 50% by mass or more, may be 70% by mass or more, and may be 90% by mass or more. Also, the weatherproof layer may not include the vinyl chloride based resin. Details of the vinyl chloride based resin will be described later.

The ratio of the (meth)acrylic based resin in the weatherproof layer is, for example, 70% by mass or more, may be 80% by mass or more, and may be 90% by mass or more.

### (2) Triazine based ultraviolet absorber

The weatherproof layer in the present disclosure includes a triazine based ultraviolet absorber.

The triazine based ultraviolet absorber is preferably a hydroxyphenyltriazine based ultraviolet absorber. The hydroxyphenyltriazine based ultraviolet absorber is an ultraviolet absorber including a hydroxyphenyltriazine structure. From the viewpoint of steric hindrance, the hydroxyphenyltriazine structure has a molecular structural characteristic that it is difficult to bleed out from the surface protective layer. Examples of preferable hydroxyphenyltriazine based ultraviolet absorber may include the compound represented by the following general formula (I).

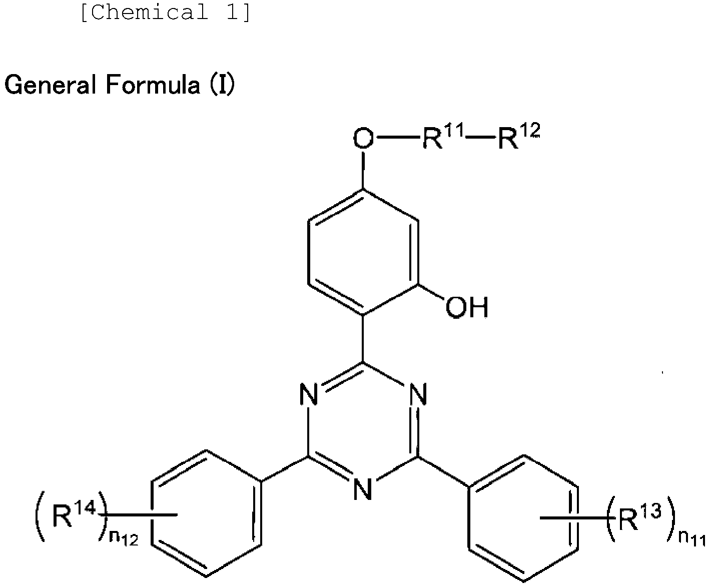

(In the general formula (I), R¹¹ is a divalent hydrocarbon group or a single bond; R¹² is a univalent hydrocarbon group, -C(=O)OR¹⁵, -O-C(=O)R¹⁶ or O-R¹⁷; each R¹³, R¹⁴, R¹⁵, R¹⁶, and R¹⁷ is independently hydrogen atom or a univalent hydrocarbon group; and each n₁₁ and n₁₂ is independently an integer of 1 or more and 5 or less. When there is a plurality of R¹³ and R¹⁴, each of them may be the same or may be different.)

Preferable examples of the divalent hydrocarbon group in R¹¹ may include aliphatic hydrocarbon groups such as alkylene groups and alkenylene groups, and alkylene groups are more preferable in view of the weatherability. The upper limit of the carbon number of the aliphatic hydrocarbon group in R¹¹ is preferably 20 or less, more preferably 12 or less, further preferably 8 or less, and more preferably 4 or less; meanwhile, the lower limit is not particularly limited, and has only to be 1 or more. The alkylene group and alkenylene group in R¹¹ may be any one of linear, branched and cyclic, and preferably linear or branched.

Preferable examples of the univalent hydrocarbon group in R¹² may include alkyl groups, alkenyl groups, cycloalkyl groups, aryl groups and aralkyl groups, and alkyl groups are more preferable. The lower limit of the carbon number of the alkyl group in R¹² is preferably 1 or more, more preferably 3 or more, and further preferably 6 or more; meanwhile, the upper limit is preferably 20 or less, more preferably 16 or less, and further preferably 12 or less. The alkyl group and alkenyl group in R¹² may be any one of linear, branched and cyclic, preferably linear or branched, and more preferably branched.

Preferable examples of the univalent hydrocarbon group in R¹³ and R¹⁴ may include alkyl groups, alkenyl groups, cycloalkyl groups, aryl groups and aralkyl groups; among them, groups including aromatic hydrocarbon groups such as aryl groups and aralkyl groups are preferable; and more preferably aryl groups.

The carbon number of the alkyl group in R¹³ and R¹⁴ is preferably 20 or less, more preferably 12 or less, further preferably 4 or less, and furthermore preferably 2 or less. In other words, as the alkyl groups in R¹³ and R¹⁴, a methyl group or an ethyl group is particularly preferable, and a methyl group is particularly preferable in view of accessibility.

The lower limit of the carbon number of the aryl group in R¹³ and R¹⁴ is preferably 6 or more; meanwhile, the upper limit is preferably 20 or less, more preferably 12 or less, and further preferably 10 or less.

The lower limit of the carbon number of the aralkyl group in R¹³ and R¹⁴ is preferably 7 or more; and the upper limit is preferably 20 or less, more preferably 12 or less, and further preferably 10 or less.

Preferable examples of the univalent hydrocarbon group in R¹⁵, R¹⁶ and R¹⁷ may include alkyl groups, alkenyl groups, cycloalkyl groups, aryl groups and aralkyl groups; among them, aliphatic hydrocarbon groups such as alkyl groups and alkenyl groups are preferable; and more preferably alkyl groups. The lower limit of the carbon number of the alkyl groups and alkenyl groups in R¹⁵, R¹⁶ and R¹⁷ is preferably 2 or more and more preferably 4 or more; and the upper limit is preferably 20 or less, more preferably 16 or less, and further preferably 12 or less.

Incidentally, in the general formula (I), R¹¹, R¹², R¹³, R¹⁴, R¹⁵, R¹⁶ and R¹⁷ may include a substituent group such as halogen atoms, hydroxyl groups, amino groups and alkyl groups with carbon number of 1 or more and 4 or less.

Each n₁₁ and n₁₂ is independently an integer of 1 or more and 5 or less, preferably an integer of 1 or more and 3 or less, and more preferably 1 or 2. When n₁₁ and n₁₂ are integers of 2 or more, each of the plurality of R¹³ and R¹⁴ may be the same or may be different, and preferably the same in view of the accessibility.

Examples of the compound represented by the general formula (I) may include compounds represented by the following Chemical formulas (1) to (4). The compound represented by the following chemical formula (1) is available as a commercial product ("Tinuvin 479 (product number)" from BASF Japan Ltd.). The compound represented by the following chemical formula (2) is available as a commercial product (ADK STAB LA-46 (product number) from ADEKA Corporation). The compound represented by the following chemical formula (3) is available as a commercial product ("Tinuvin 1600 (product number)" from BASF Japan Ltd.). The compound represented by the following chemical formula (4) is available as a commercial product ("Tinuvin 1577 (product number)" from BASF Japan Ltd.).

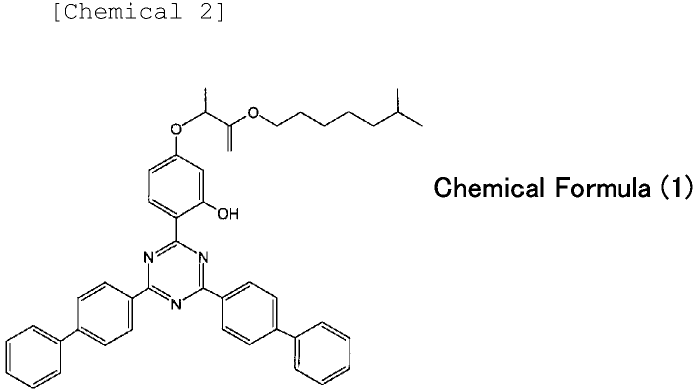

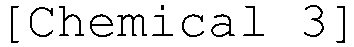

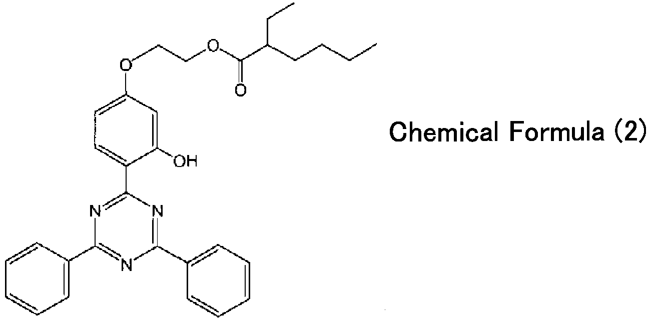

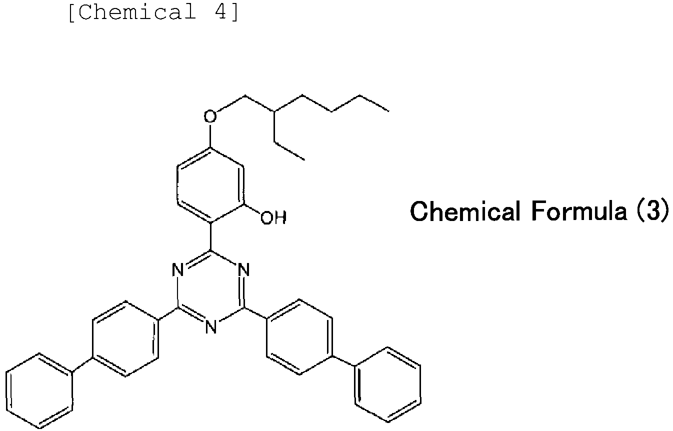

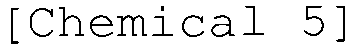

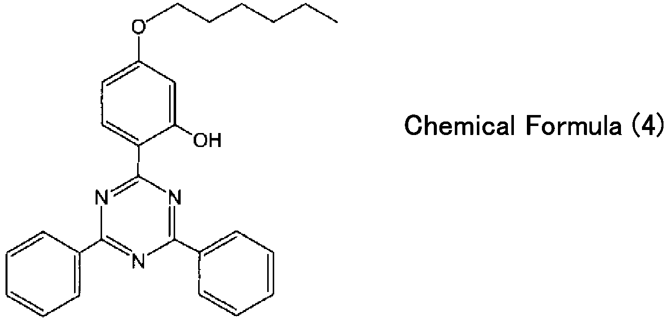

The content of the triazine based ultraviolet absorber in the weatherproof layer is not particularly limited, and is, for example, 0.1 parts by mass or more, and may be 1 part by mass or more, with respect to 100 parts by mass of the (meth)acrylic based resin. Meanwhile, the content of the triazine based ultraviolet absorber is, for example, 5 parts by mass or less, and may be 3 parts by mass or less, with respect to 100 parts by mass of the (meth)acrylic based resin.

In the decorative sheet, the triazine based ultraviolet absorber included in the weatherproof layer and the triazine based ultraviolet absorber included in the surface protective layer may or may not be the same type.

### (3) Weatherproof layer

The weatherproof layer in the present disclosure may include an additive. Examples of the additive may include light stabilizers, heat-resistant stabilizers, antioxidants, antistatic agents and flame retardant. Examples of the light stabilizer may include hindered amine based compounds. The hindered amine based compound usually have a structure including 2,2,6,6-tetramethylpiperidine skeleton in the molecule. Examples of the hindered amine based compound may include NH-type hindered amine based compounds, NR-type hindered amine based compounds, and NOR-type hindered amine based compounds. Also, examples of the antioxidant may include a phenol based antioxidant, a sulfur based antioxidant, and a phosphorus based antioxidant. Also, cross-linked rubber (cross-linked polymer) may be compounded to impart flexibility (lower the elastic modulus) to the weatherproof layer.

The weatherproof layer may be transparent, may be translucent, and may be opaque. Also, the weatherproof layer may be colored, and may be colorless. When the decorative sheet includes a design layer, the weatherproof layer preferably has transparency capable of discerning the design layer.

The thickness of the weatherproof layer is usually 30 µm or more, preferably 40 µm or more, and particularly preferably 50 µm or more. When the thickness of the weatherproof layer is too thin, sufficient weatherability may not be obtained. Meanwhile, the thickness of the weatherproof layer is, for example, 100 µm or less, preferably 80 µm or less, and particularly preferably 70 µm or less. When the thickness of the weatherproof layer is too thick, the processability may be deteriorated.

In view of the processability, the tensile elastic modulus of the weatherproof layer is preferably 3000 MPa or less, and more preferably 2500 MPa or less. Incidentally, the tensile elastic modulus in the present disclosure is a value measured according to JIS K 7127-1:2014.

Examples of a method for forming a weatherproof layer may include an extrusion molded film using an extruder such as a T-die extruder. Also, the weatherproof layer may be prepared in advance and heat laminated with other layers. Also, the weatherproof layer may be subjected to a surface treatment such as corona discharge treatment.

### 2. Surface protective layer

As described above, in the decorative sheet in the present disclosure, the weatherproof layer includes a (meth)acrylic based resin. Compared to the vinyl chloride based resin, the antifouling property (such as chemical resistance) of the (meth)acrylic based resin tends to be low. In the present disclosure, the antifouling property can be improved by disposing the surface protective layer on the surface of the weatherproof layer that is opposite to the substrate layer side. Further, the weatherability of the decorative sheet is further improved when the surface protective layer includes the triazine based ultraviolet absorber. Also, as shown in FIG. 1 and FIG. 2, the decorative sheet 10 may include a surface protective layer 3 as the outermost layer.

### (1) Triazine based ultraviolet absorber

Since the triazine based ultraviolet absorber is similar to the content described in "1. Weatherproof layer" above, the description herein is omitted.

### (2) Resin component

The surface protective layer includes a resin component. The resin component mainly functions as the binder resin. As the resin component, the surface protective layer preferably includes at least one of a resin composition, and a cured product thereof. The cured product may be a cured product obtained by curing a curable resin composition by ionizing radiation, and may be a cured product obtained by curing a curable resin composition by heat.

Examples of the curable resin composition may include ionizing radiation curable resin compositions and thermosetting resin compositions. In the present disclosure, the ionizing radiation curable resin composition is preferable. This is because it has excellent scuff resistance and production efficiency. In other words, the surface protective layer preferably includes a cured product of an ionizing radiation curable resin composition as the resin component.

Specific examples of the ionizing radiation curable resin composition may include an electron beam curable resin composition, and an ultraviolet curable resin composition. In particular, the electron beam curable resin compositions have advantages such as less odor and less coloring, since a polymerization initiator is not necessary.

The ionizing radiation curable resin composition is a composition including a compound including ionizing radiation curable functional group (hereinafter, it may be referred to as "ionizing radiation curable compound"). The ionizing radiation curable functional group is a group cross-linked and cured by an irradiation of ionizing radiation, and specific examples thereof may include functional groups including an ethylenically double bond such as (meth) acryloyl groups, vinyl groups, and allyl groups. Also, other specific examples of the ionizing radiation curable functional group may include epoxy groups, and oxetanyl groups. In the present descriptions, the (meth)acryloyl group refers to an acryloyl group or a methacryloyl group. Also, in the present descriptions, the (meth)acrylate refers to an acrylate or a methacrylate. Also, the "ionizing radiation" refers to, among electromagnetic waves and charged particle beams, one having energy quantum capable of polymerizing or crosslinking molecules. Specific examples of the ionizing radiation may include ultraviolet (UV), and electron beam (EB). Other specific examples of the ionizing radiation may include electromagnetic waves such as X-rays and γ-rays; and charged particle beams such as α-rays and ion rays.

The ionizing radiation curable resin composition may include only one type of the ionizing radiation curable compound, and may include two types or more. The type of ionizing radiation curable compound is not particularly limited, and well-known polymerizable monomers and well-known polymerizable oligomers (polymerizable prepolymers) can be used.

The ionizing radiation curable compound preferably includes a compound including two or more ethylenically unsaturated bonding groups. Among them, the ionizing radiation curable compound preferably includes a polyfunctional (meth)acrylate based compound including two or more ethylenically unsaturated bonding groups. The polyfunctional (meth)acrylate based compound may be a monomer, and may be an oligomer.

The polyfunctional (meth)acrylate based compound may be a bifunctional (meth)acrylate based monomer and may be a trifunctional or more functional (meth)acrylate based monomer. Examples of the bifunctional (meth)acrylate based monomer may include ethylene glycol di(meth)acrylate, bisphenol A tetraethoxydiacrylate, bisphenol A tetrapropoxydiacrylate, and 1,6-hexanediol diacrylate. Examples of the trifunctional or more functional (meth)acrylate based monomer may include trimethylolpropane tri(meth)acrylate, pentaerythritol tri(meth)acrylate, pentaerythritol tetra(meth)acrylate, dipentaerythritol hexa(meth)acrylate, dipentaerythritol tetra(meth)acrylate, and isocyanuric acid modified tri(meth)acrylate.

Examples of the polyfunctional (meth)acrylate oligomer may include acrylate based polymers such as urethane (meth)acrylate, epoxy (meth)acrylate, polyester (meth)acrylate and polyether (meth)acrylate.

The urethane (meth)acrylate is obtained, for example, by the reaction of polyalcohols and organic diisocyanates with hydroxy (meth)acrylate. Also, epoxy (meth)acrylate is obtained, for example, by the reaction of epoxy based resins with (meth)acrylic acid. At least one of the polybasic acids and phenols may be further used in this reaction. The epoxy based resin may be bifunctional, and may be trifunctional or more functional. Also, examples of the epoxy based resin may include aromatic epoxy based resins, alicyclic epoxy based resins, and aliphatic epoxy based resins.

The ionizing radiation curable compound may include silicone (meth)acrylate. By using the silicone (meth)acrylate, the antifouling property of the surface protective layer is improved. Examples of the silicone (meth)acrylate may include silicone oils including polysiloxane. The silicone (meth)acrylate may be a modified silicone oil wherein a (meth)acrylic group is introduced at the end of the polysiloxane. The content of the silicone (meth)acrylate is, for example, 1 part by mass or more and 7 parts by mass or less, and may be 2 parts by mass or more and 5 parts by mass or less, with respect to 100 parts by mass of the ionizing radiation curable compound (excluding the silicone (meth)acrylate).

When the ionizing radiation curable compound is an ultraviolet curable compound, the ionizing radiation curable resin composition preferably includes an additive such as a photopolymerization initiator and a photopolymerization accelerator. Examples of the photopolymerization initiator may include acetophenone, benzophenone, α-hydroxyalkylphenone, Michler's ketone, benzoin, benzyldimethylketol, benzoyl benzoate, α-acyloxime esters, and thioxanthones. Examples of the photopolymerization accelerator may include p-dimethylaminobenzoic acid isoamyl ester and p-dimethylaminobenzoic acid ethyl ester.

Meanwhile, the thermosetting resin composition is a composition including at least thermosetting resin. This resin composition cures by heating. Examples of the thermosetting resin may include acrylic based resins, urethane based resins, phenolic based resins, urea melamine based resins, epoxy based resins, unsaturated polyester based resins, and silicone based resins. The thermosetting resin composition may include an additive such as curing agent and curing catalyst, if necessary.

### (3) Surface protective layer

As an additive, the surface protective layer may further include at least one of antioxidants, light stabilizers, antimicrobial agents, antivirus agents and antiallergen agents. As these additives, a known arbitrary additive may be used. As the antioxidants and light stabilizers, for example, the materials described in "1 Weatherproof layer" above may be used.

The thickness of the surface protective layer is not particularly limited, and it is, for example, 1 µm or more and 50 µm or less. When the surface protective layer is too thin, sufficient durability may not be imparted, and when the surface protective layer is too thick, the visibility of the design layer may be reduced. The thickness of the surface protective layer may be 3 µm or more and 40 µm or less, and may be 5 µm or more and 35 µm or less.

Examples of the method for forming a surface protective layer may include a method wherein the surface of a weatherproof layer is coated with a mixture including a resin component and an additive, and then, dried, and cured. Also, a surface of a substrate having releasing property may be coated with the mixture, dried, and cured to form a surface protective layer, and the surface protective layer may be transferred to the weatherproof layer.

### 3. Substrate layer

The substrate layer in the present disclosure is a layer configured to support the weatherproof layer and surface protective layer. The substrate layer includes a vinyl chloride based resin. An example of the vinyl chloride based resin is polyvinyl chloride that is a monopolymer of vinyl chloride. Other examples of the vinyl chloride based resin may include copolymers of vinyl chloride and another monomer capable of being copolymerized with the vinyl chloride. Examples of other monomers copolymerizable with vinyl chloride may include vinyl esters such as vinyl acetate and vinyl propionate; acrylic esters such as methyl acrylate and butyl acrylate; methacrylic esters such as methyl methacrylate and ethyl methacrylate; maleic esters such as butyl maleate and diethyl maleate; fumaric esters such as dibutyl fumarate and diethyl fumarate; vinyl ethers such as vinyl methyl ether, vinyl butyl ether and vinyl octyl ether; vinyl cyanides such as acrylonitrile and methacrylonitrile; olefins such as ethylene, propylene, butylene and styrene; dienes such as isoprene and butadiene; vinylidene halides (excluding vinyl chloride), vinyl halides such as vinylidene chloride and vinyl bromide; and allyl phthalates such as diallyl phthalate. These other monomers may be used alone, and two types or more may be used in a combination.

The average polymerization degree of the vinyl chloride based resin is, for example, 500 or more and 4000 or less, may be 700 or more and 3900 or less, and may be 1000 or more and 3800 or less. The average polymerization degree in the present disclosure is measured according to JIS K 6721.

As the resin, the substrate layer may include only the vinyl chloride based resin, and may further include other resins different from the vinyl chloride based resin. Examples of other resins may include (meth)acrylic based resins, chlorinated polyethylene and ethylene-vinyl acetate copolymers. The substrate layer preferably includes the vinyl chloride based resin as a main component of resin. The ratio of the vinyl chloride based resin, with respect to all the resins in the substrate layer is, for example, 50% by mass or more, may be 70% by mass or more, and may be 90% by mass or more.

The substrate layer preferably includes a plasticizer in addition to the vinyl chloride based resin. By adding the plasticizer, a soft substrate layer is obtained. Examples of the plasticizer may include phthalate based plasticizers such as dibutyl phthalate (DBP), dioctyl phthalate (DOP), diisononyl phthalate (DINP), diisodecyl phthalate (DIDP), and diundecyl phthalate (DUP); adipic acid based plasticizers such as dibutyl adipate; phosphate based plasticizers such as tributyl phosphate, tricresyl phosphate, and triphenyl phosphate; trimellitic acid based plasticizers such as tributyl trimellitate, trioctyl trimellitate, and tri-2-ethylhexyl trimellitate (TOTM); ester based plasticizers such as adipic acid based polyesters; and citrate esters such as acetyl tributyl citrate and acetyl trioctyl citrate. Also, these plasticizers may be used alone, and two types or more may be used in a combination.

The content of the plasticizer is not particularly limited, and is, for example, 5 parts by mass or more, and may be 8 parts by mass or more, with respect to 100 parts by mass of the vinyl chloride based resin. Meanwhile, the content of the plasticizer is, for example, 30 parts by mass or less, with respect to 100 parts by mass of the vinyl chloride based resin.

The substrate layer may further include an additive such as heat stabilizers, flame retardants, light stabilizers, ultraviolet absorbers, fillers, and coloring agents, if necessary. Also, in order to improve the close adhesiveness, for example, the substrate layer may be subjected to a surface treatment. Examples of the surface treatment may include an oxidation method and a roughening method. Examples of the oxidation method may include corona discharge treatment, chromium oxidation treatment, flame treatment, hot air treatment, and ozone-ultraviolet treatment method. Examples of the roughening method may include a sand blasting method and a solvent treatment method.

Examples of the shape of the substrate layer may include a sheet-shape. The thickness of the substrate layer is not particularly limited, and it is, for example, 10 µm or more and 300 µm or less. The basis weight of the substrate layer is not particularly limited, and it is, for example, 50 g/m² or more and 300 g/m² or less, and may be 60 g/m² or more and 160 g/m² or less.

### 4. Design layer

The decorative sheet in the present disclosure may include a design layer on one surface side of the weatherproof layer. Also, the decorative sheet may include a design layer between the substrate layer and weatherproof layer. By providing the design layer, the designability of the decorative sheet is improved. Meanwhile, the decorative sheet may not include a design layer. Also, in a plan view of the decorative sheet along the thickness direction, the design layer may be disposed on the entire surface of the decorative sheet, and may be disposed on a part of the decorative sheet.

Examples of the design layer may include a solid layer (the entire surface of the layer is coated with ink) and a pattern layer (a layer printed with ink). Examples of the pattern (design) in the pattern layer may include wood-grain pattern, stone-grain pattern, sand-grain pattern, tile laying design, brick laying design, fabric-grain pattern, leather tie-dyed pattern, geometric shapes, letters, symbols, abstract patterns, and plant and flower patterns.

The design layer usually includes a colorant and a binder resin. Examples of the colorant may include inorganic pigments such as carbon black (cake ink), iron black, titanium white, antimony white, lead yellow, titanium yellow, Bengal red, cadmium red, ultramarine blue, and cobalt blue; organic pigments (including dyes) such as quinacridone red, isoindolinone yellow, nickel azo complex, phthalocyanine blue, and azomethineazo black; metallic pigments such as aluminum and brass; and pearl pigments such as titanium dioxide-coated mica, and basic lead carbonate.

Examples of the binder resins may include urethane based resins, acrylic polyol based resins, acrylic based resins, ester based resins, amide based resins, butyral based resins, styrene based resins, urethane-acrylic copolymers, vinyl chloride-vinyl acetate copolymers, vinyl chloride-vinyl acetate-acrylic copolymers, chlorinated propylene based resins, cellulose nitrate based resins, and cellulose acetate based resins.

The design layer may include an additive such as ultraviolet absorbers, light stabilizers, curing agents, plasticizers, and catalysts, if necessary. The thickness of the design layer is, for example, 0.5 µm or more and 20 µm or less, may be 1 µm or more and 10 µm or less, and may be 2 µm or more and 5 µm or less.

Examples of the method for forming a design layer may include a method wherein an ink including a colorant, a binder resin, and a solvent is applied, and then, dried. As the method for application, a gravure printing method is preferable.

### 5. Decorative sheet

The decorative sheet in the present disclosure includes at least the substrate layer, weatherproof layer and surface protective layer. The decorative sheet may include only the substrate layer, weatherproof layer, and surface protective layer, and may include other layers in addition to the substrate layer, weatherproof layer and surface protective layer. The decorative sheet may further include at least one layer of, for example, design layers, adhesive layers, primer layers, foamed resin layers and non-foamed resin layers. Examples of the layer structure of the decorative sheet may include the following layer structures.

(1) Substrate layer/weatherproof layer/ surface protective layer
(2) Substrate layer/ weatherproof layer/ primer layer/ surface protective layer
(3) Substrate layer/ design layer/weatherproof layer/ surface protective layer
(4) Substrate layer/ design layer/weatherproof layer/ primer layer/ surface protective layer
(5) Substrate layer/adhesive layer/weatherproof layer/ surface protective layer
(6) Substrate layer/adhesive layer/ design layer/weatherproof layer/ surface protective layer
(7) Substrate layer/ design layer/adhesive layer/weatherproof layer/ surface protective layer
(8) Substrate layer/ adhesive layer/weatherproof layer/ primer layer/ surface protective layer
(9) Substrate layer/adhesive layer/ design layer/weatherproof layer/ primer layer/ surface protective layer
(10) Substrate layer/ design layer/adhesive layer/weatherproof layer/ primer layer/ surface protective layer
(11) Substrate layer/foamed resin layer/weatherproof layer/ surface protective layer
(12) Substrate layer/foamed resin layer/ weatherproof layer/ primer layer/ surface protective layer
(13) Substrate layer/foamed resin layer/ design layer/weatherproof layer/ surface protective layer
(14) Substrate layer/foamed resin layer/ design layer/weatherproof layer/ primer layer/ surface protective layer
(15) Substrate layer/foamed resin layer/adhesive layer/weatherproof layer/ surface protective layer
(16) Substrate layer/foamed resin layer/adhesive layer/ design layer/weatherproof layer/ surface protective layer
(17) Substrate layer/foamed resin layer/ design layer/adhesive layer/weatherproof layer/ surface protective layer
(18) Substrate layer/foamed resin layer/adhesive layer/ weatherproof layer/ primer layer/ surface protective layer
(19) Substrate layer/foamed resin layer/adhesive layer/ design layer/weatherproof layer/ primer layer/ surface protective layer
(20) Substrate layer/foamed resin layer/ design layer/adhesive layer/weatherproof layer/ primer layer/ surface protective layer

The "/" above shows the relative position of each layer, and for example, "A/B/C" means that A, B and C are disposed in this order along the thickness direction. Also, when described as, for example, "A/B", A and B may be disposed so as to be in direct contact, and may be disposed via another layer. Also, as exemplified in (11) to (20) above, when the decorative sheet includes a foamed resin layer, a non-foamed resin layer may be disposed on one surface or both surfaces of the foamed resin layer.

### (1) Primer layer

The decorative sheet may include a primer layer on the weatherproof layer side surface of the surface protective layer. By providing the primer layer, the close adhesiveness between the surface protective layer and the weatherproof layer is improved, and, for example, the deterioration of the interlayer close adhesiveness, when exposed to ultraviolet rays, can be suppressed. Also, by providing the primer layer, the scuff resistance of the surface protective layer is improved.

The primer layer includes at least a binder resin. Examples of the binder resins may include urethane based resins, acrylic polyol based resins, acrylic based resins, ester based resins, amide based resins, butyral based resins, styrene based resins, urethane-acrylic copolymers, polycarbonate based urethane-acrylic copolymers, vinyl chloride-vinyl acetate copolymers, vinyl chloride-vinyl acetate-acrylic copolymers, chlorinated propylene based resins, cellulose nitrate based resins, and cellulose acetate based resins. The primer layer may include only one type of the resin, and may include two types or more.

The primer layer may include a cured product of the binder resin. Examples of the curing agent may include isocyanate based curing agents, and epoxy based curing agents. In particular, the cured product of the binder resin is preferably a cured product obtained by crosslinking and curing polyol based resins such as acrylic polyol based resins with an isocyanate based curing agent.

The primer layer may further include at least one of an ultraviolet absorber and a light stabilizer. For ultraviolet absorbers and light stabilizers, commonly used ones can be used. The thickness of the primer layer is, for example, 0.01 µm or more and 10 µm or less, may be 0.7 µm or more and 8 µm or less, and may be 1 µm or more and 6 µm or less. Also, examples of the method for forming a primer layer may include a method wherein a resin composition including a binder resin, and a solvent is applied, and then, dried. A curing treatment may be carried out, if necessary.

### (2) Adhesive layer

The decorative sheet may include an adhesive layer. The position of the adhesive layer is not particularly limited. The adhesive layer may be disposed between the substrate layer and weatherproof layer. Also, when the decorative sheet includes a design layer, the adhesive layer may be disposed between the design layer and weatherproof layer. Also, when the substrate layer is a stacked body including two layers or more, the adhesive layer may be disposed between each layer constituting the substrate layer. Also, the decorative sheet may include an adhesive layer (rear surface adhesive layer) on the surface of the substrate layer that is opposite side to the surface protective layer. In this case, the decorative sheet may include a peelable separator layer on the surface of the adhesive layer that is opposite side to the substrate layer.

The adhesive layer includes resin. Examples of the resin may include ethylene-vinyl acetate copolymer (EVA), ethylene-methyl methacrylate copolymer (EMMA), ethylene-ethyl acrylate copolymer (EEA), ethylene-methyl acrylate copolymer (EMA), ethylene-(meth)acrylate copolymer (EMAA), acrylic based resins, styrene based resins, ester based resins, urethane based resins, chlorinated olefin based resins, vinyl chloride-vinyl acetate copolymer based resins, vinyl butyral based resins, alkyd based resins, oil based resins, ketone based resins, epoxy based resins, melamine based resins, fluorine based resins, silicone based resin cellulose derivatives, and rubber based resins.

The thickness of the adhesive layer is, for example, 0.1 µm or more and 10 µm or less. Also, examples of the method for forming an adhesive layer may include a method wherein a resin composition including a resin, and a solvent is applied, and then, dried.

### (3) Foamed resin layer

The decorative sheet may include a foamed resin layer between the substrate layer and weatherproof layer. When the decorative sheet includes a design layer, the foamed resin layer may be disposed on the substrate layer side surface of the design layer, and may be disposed on the weatherproof layer side surface of the design layer. By providing the foamed resin layer, the designability and texture of the decorative sheet are improved. Meanwhile, the decorative sheet may not include a foamed resin layer.

The foamed resin layer includes resin. The foamed resin layer may include a cured product of the resin described above. Examples of the resin may include thermoplastic resins. Examples of thermoplastic resins may include vinyl chloride based resins, olefin based resins, styrene based resins, acrylonitrile-butadiene-styrene based copolymers (ABS based resins), acrylonitrile-styrene based copolymers, nylon, acetal based resins, acrylic based resins, carbonate based resins, ester based resins, vinyl acetate based resins, vinyl alcohol based resins, and urethane based resins.

The foamed resin layer includes a bubble inside thereof. The bubble may be an independent bubble, and may be a continuous bubble. Also, the independent bubble and continuous bubble may exist in a mixed manner in the foamed resin layer. The bubble is formed by the foaming of a foaming agent included in a foaming agent-including resin layer, and the number, size, density and shape thereof are not particularly limited.

### (4) Non-foamed resin layer

The decorative sheet may include a non-foamed resin layer between the substrate layer and weatherproof layer. The non-foamed resin layer is a layer that does not include bubbles due to the foaming of a foaming agent. When the decorative sheet includes the foamed resin layer, the non-foamed resin layer may be disposed on the substrate layer side surface of the foamed resin layer, and may be disposed on the surface protective layer side surface of the foamed resin layer. Meanwhile, the decorative sheet may not include a non-foamed resin layer. Since the resin used for the non-foamed resin layer is similar to the resin used for the foamed resin layer, the descriptions herein will be omitted.

### (5) Decorative sheet

The decorative sheet in the present disclosure includes at least the substrate layer, weatherproof layer and surface protective layer. As described above, the decorative sheet may further include other layers such as design layers, primer layers, adhesive layers, foamed resin layers and non-foamed resin layers.

The decorative sheet may include an embossed pattern on the surface protective layer side outermost surface, based on the substrate layer. Among them, the embossed pattern is preferably disposed on the surface of the surface protective layer that is opposite to the substrate layer. Examples of the embossed pattern may include a duct groove of wood-grain plate, a stone plate surface convexoconcave, a cloth surface texture, a pear skin finish, a sand-grain, a hairline, and a hatching-line groove.

Examples of the method for forming the embossed pattern may include a method wherein a decorative sheet is heated, and pressing an embossing plate. The heating temperature of the decorative sheet is, for example, 80°C or more and 260°C or less, may be 85°C or more and 200°C or less, and may be 100°C or more and 180°C or less.

### 6. Use application

The decorative sheet in the present disclosure is used for, for example, a decorative member described later. The decorative member is used for, for example, construction material, may be an interior member, and may be an exterior member. The decorative sheet is preferably used for, for example, surfacing materials of, for example, exterior walls, interior walls, roofs, eaves soffit, door pockets, window frames and door frames of constructions such as houses, offices, shops, hospitals, and clinics.

### 7. Method for producing

The method for producing a decorative sheet in the present disclosure is not particularly limited. Examples of methods for producing a decorative sheet may include production methods including a surface protective layer side sheet producing step of forming the surface protective layer on one surface of the weatherproof layer to produce a surface protective layer side sheet; a substrate layer side sheet producing step of forming a design layer, if necessary, on one surface of the substrate layer to produce a substrate layer side sheet; and a step of stacking the weatherproof layer side surface of the surface protective layer side sheet and the design layer side surface of the substrate layer side sheet so that they face each other, and thermally laminating thereof. Either one of the surface protective layer side sheet producing step and the substrate layer side sheet producing step may be carried out first, and they may be carried out parallelly.

### B. Decorative member

The present disclosure provides a decorative member comprising a base member and the decorative sheet described above. The base member and the decorative sheet are disposed so that the base member and the substrate layer side surface of the decorative sheet face each other.

According to the present disclosure, since the decorative sheet described above is included, a decorative member having excellent weatherability may be obtained.

### 1. Decorative sheet

Since the decorative sheet in the present disclosure is similar to the content described in "A. Decorative sheet" above, the description herein is omitted.

### 2. Base member

The base member in the present disclosure is a member decorated by the decorative sheet. Examples of the base member may include a resin member. Examples of the resin used for the resin member may include vinyl chloride based resins, acrylic based resins, ester based resins, styrene based resins, olefin based resins, acrylonitrile-butadiene-styrene based copolymers (ABS based resins), phenolic based resins, cellulose based resins and rubber, and among them, vinyl chloride based resin is preferable. For details of each resin, the contents described in "A. Decorative sheet" above may be cited as appropriately. Also, other examples of the base member may include a woody member. Examples of the woody member may include wood single panel, plywood panel, particle board, and woody fiberboard. Examples of the wood used for the woody member may include cedar, hinoki cypress, pine, and lauan.

Also, other examples of the base member may include a metal member. Examples of the metal used for the metal member may include iron, and aluminum. Also, other examples of the base member may include a ceramic member. The material of the ceramic member may be ceramics such as glass and pottery, may be non-cement ceramic based materials such as gypsum, and may be non-pottery ceramic based materials such as ALC (lightweight aerated concrete).

The shape of the base member is not particularly limited, and examples may include a plate shape, a sheet shape, and a tridimensional shape. Also, the base member may include a flat surface portion, may include a curved surface portion, and may include both the flat surface portion and the curved surface portion. Also, the base member may include at least one of a convex portion, a concave portion, a convexity portion, a concavity portion, and a through portion.

### 3. Decorative member

The decorative member in the present disclosure includes the decorative sheet described above and the base member. The decorative member in the present disclosure may be an interior member, and may be an exterior member, and the latter is preferable. This is because the decorative member in the present disclosure has excellent weathering property. Also, since the use application of the decorative member is the similar to the contents described in "A. Decorative sheet" above, the descriptions herein will be omitted.

The decorative member in the present disclosure may be obtained by, for example, stacking the decorative sheet and the base member. Specifically, the surface of the base member (the surface to be decorated) and the substrate layer side surface of the decorative sheet are stacked so as to face each other. Examples of the method for stacking the base member and the decorative sheet may include lamination method, wrapping method, and vacuum forming method. In the lamination method, for example, the decorative sheet is pressurized onto a plate-like base member with a pressuring roller. In this case, an adhesive layer may be disposed between the decorative sheet and the base member. In the wrapping method, for example, while feeding the decorative sheet, the decorative sheet is sequentially pressurized and adhered to the multiple side surfaces constituting the base member, using multiple rollers with different orientations. In this case, an adhesive layer may be disposed between the decorative sheet and the base member. When a hot melt adhesive (heat-sensitive adhesive) is used to stack the decorative sheet and the base member, the heating temperature at that time is, for example, 160°C or more and 200°C or less. Also, when a reactive hot melt adhesive is used, the heating temperature is, for example, 100°C or more and 130°C or less.

The present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### Examples

### [Example 1]

### (Substrate layer side sheet producing step)

Firstly, a polyvinyl chloride film (thickness of 80 µm), including 20 parts by mass of polyester based plasticizer with respect to 100 parts by mass of polyvinyl chloride, was prepared as a substrate. A design layer (pictorial pattern layer) was formed by coating one surface of the substrate with a printing ink including a mixture of a vinyl chloride-vinyl acetate copolymer as a binder and acrylic based resin.

### (Surface protective layer side sheet producing step)

An acrylic film (thickness of 50 µm) including polymethyl methacrylate (PMMA) and a triazine based ultraviolet absorber (UVA Tinuvin 479) was prepared as a weatherproof layer. The content of the UVA, with respect to 100 parts by mass of PMMA was 1 part by mass. A coating layer was formed by coating one surface of the acrylic film with an electron beam curable type resin coating agent using a gravure coating method. A surface protective layer having a thickness of 5 µm was formed by irradiating electron beam to the coating layer under conditions of accelerating voltage of 125 KeV and 5 Mrad. As the electron beam curable type resin coating agent, one obtained by adding 2 parts by mass of a triazine based ultraviolet absorber (UVA Tinuvin 479) and 2 parts by mass of a light stabilizer (HALS Tinuvin 123) to 100 parts by mass of urethane acrylate as the electron beam curable resin, was used.

The sheet produced in the surface protective layer side sheet producing step was stacked onto the design layer side of the sheet produced in the substrate layer side sheet producing step so that the surface protective layer is the outermost surface, and the sheets were thermally laminated at 150°C. Thereby obtained a decorative sheet including a substrate layer (polyvinyl chloride), a design layer, a weatherproof layer (acrylic based resin), and a surface protective layer in this order, in the thickness direction.

### [Example 2]

A decorative sheet was produced in the same manner as in Example 1 except that the thickness of the acrylic film was 100 µm.

### [Example 3]

A decorative sheet was produced in the same manner as in Example 1 except that the thickness of the acrylic film was 30 µm.

### [Comparative Example 1]

A decorative sheet was produced in the same manner as in Example 1 except that the weatherproof layer (transparent resin layer) was changed from the acrylic film, including a triazine based ultraviolet absorber, to a polyvinyl chloride film (thickness of 90 µm, including 25 parts by mass of a plasticizer with respect to 100 parts by mass of vinyl chloride based resin (PVC)) including a benzophenone based ultraviolet absorber. The content of the ultraviolet absorber, with respect to 100 parts by mass of PVC was 1 part by mass.

### [Comparative Example 2]

A decorative sheet was produced in the same manner as in Example 1 except that the surface protective layer was not formed.

### [Evaluation]

### (Weatherability)

The weatherability of the decorative sheets obtained in Examples 1 to 3 and Comparative Examples 1 and 2 was evaluated. Specifically, an accelerated weatherability test using a metal halide lamp (MWOM) was carried out for 800 hours (a test repeating a cycle of: irradiating ultraviolet rays for 20 hours under the following irradiation conditions, and then, a dew condensation was carried out for 4 hours under the following dew condensation conditions), and then, the appearance was visually observed from the surface protective layer side.

### <Testing device>

Product name "Daipla MetalWeather" from Daipla Wintes Co., Ltd.

### <Irradiation conditions>

Illuminance: 65 mW/cm², Black panel temperature: 63°C, Bath humidity: 50%RH, Time: 20 hours

### <Dew condensation conditions>

Illuminance: 0 mW/cm², Bath humidity: 98%RH, Time: 4 hours

Those for which no change in appearance was observed were evaluated as ⊚, those for which slight change in appearance was observed were evaluated as ○, and those for which significant discoloration was observed were evaluated as ×.

### (Processability)

The processability of the decorative sheets obtained in Examples 1 to 3 and Comparative Examples 1 and 2 was evaluated. Specifically, a base member including a bent portion (R = 1 mm) and a decorative sheet were laminated together by pressure bonding via an adhesive layer (hot melt) having a thickness of 50 µm, and the decorative sheet was visually inspected for lifting at the bent portion. Those for which floating was not observed at all were evaluated as ⊚, and those for which almost no floating was observed were evaluated as ○.

### (Antifouling property)

The outermost surface (the surface opposite side to the substrate layer, based on the weatherproof layer) of the decorative sheets obtained in Examples 1 to 3 and Comparative Examples 1 and 2 was subjected to ethanol rubbing (load of 300 g/cm², 20 strokes), and the appearance of the tested region was visually evaluated. Those for which no change in appearance was observed were evaluated as ○, and those for which significant change in appearance was observed were evaluated as ×.

The evaluation results are shown in Table 1.

**[Table 1]**

| | Example 1 | Example 2 | Example 3 | Comp. Ex. 1 | Comp. Ex. 2 |
|---|---|---|---|---|---|
| Surface protectively | 5 µm | 5 µm | 5 µm | 5 µm | - |
| Weatherproofly | Acrylic (50 µm) | Acrylic (100 µm) | Acrylic (30 µm) | PVC (90 µm) | Acrylic (50 µm) |
| Substrately | PVC (80 µm) | PVC (80 µm) | PVC (80 µm) | PVC (80 µm) | PVC (80 µm) |
| Weatherability | ⊚ | ⊚ | ○ | × | ⊚ |
| Processability | ⊚ | ○ | ⊚ | ⊚ | ⊚ |
| Antifouling property | ○ | ○ | ○ | ○ | × |

It was confirmed that the decorative sheets obtained in Examples 1 to 3 had excellent weatherability. Further, the decorative sheets obtained in Examples 1 to 3 also had excellent processability and antifouling property. Meanwhile, excellent weatherability was not obtained with the decorative sheet in Comparative Example 1. This is presumed that, since the weatherproof layer includes the vinyl chloride based resin, discoloration over time due to the dechlorination reaction could not be suppressed. Also, it was confirmed that, although the decorative sheet in Comparative Example 2 including no surface protective layer had excellent weatherability itself, the fouling resistance was low.

As described above, in the present disclosure, for example, the following inventions are provided.

[1] A decorative sheet comprising a substrate layer, a weatherproof layer and a surface protective layer, in this order in a thickness direction, wherein
   the substrate layer includes a vinyl chloride based resin;
   the weatherproof layer includes a (meth)acrylic based resin and a triazine based ultraviolet absorber, and a thickness thereof is 30 µm or more; and
   the surface protective layer includes a triazine based ultraviolet absorber.
[2] The decorative sheet according to [1], wherein the decorative sheet is used for a decorative member;
   the decorative member includes a base member and the decorative sheet; and
   the decorative member is an exterior member.
[3] The decorative sheet according to [2], wherein the base member includes a vinyl chloride based resin.
[4] The decorative sheet according to any one of [1] to [3], wherein the weatherproof layer includes the (meth)acrylic based resin as a main component of resin.
[5] The decorative sheet according to any one of [1] to [4], wherein, as the (meth)acrylic based resin, the weatherproof layer includes at least one type of polymethyl(meth)acrylate, polyethyl(meth)acrylate, polybutyl(meth)acrylate, methyl(meth)acrylatebutyl(meth)acrylate copolymer, methyl(meth)acrylate-styrene copolymer, methyl(meth)acrylate-butyl(meth)acrylate-2-hydroxyethyl(meth)acrylate copolymer, and methyl(meth)acrylate-butyl (meth)acrylate-2-hydroxyethyl(meth)acrylate-styrene copolymer.
[6] The decorative sheet according to any one of [1] to [5], wherein a thickness of the weatherproof layer is 100 µm or less.
[7] The decorative sheet according to any one of [1] to [6], wherein the decorative sheet includes a design layer between the substrate layer and the weatherproof layer.
[8] The decorative sheet according to any one of [1] to [7], wherein the surface protective layer includes a cured product of an ionizing radiation curable resin composition.
[9] The decorative sheet according to [8], wherein the ionizing radiation curable resin composition is an electron beam curable resin composition.
[10] A decorative member comprising:
   a base member; and
   the decorative sheet according to any one of [1] to [9].
[11] The decorative member according to [10], wherein the decorative member is an exterior member.
[12] The decorative member according to [10] or [11], wherein the base member includes a vinyl chloride based resin.

### Reference Signs List

- 1: substrate layer
- 2: weatherproof layer
- 3: surface protective layer
- 4: design layer
- 10: decorative sheet

## Claims

1. A decorative sheet comprising a substrate layer, a weatherproof layer and a surface protective layer, in this order in a thickness direction, wherein
the substrate layer includes a vinyl chloride based resin;
the weatherproof layer includes a (meth)acrylic based resin and a triazine based ultraviolet absorber, and a thickness thereof is 30 µm or more; and
the surface protective layer includes a triazine based ultraviolet absorber.

2. The decorative sheet according to claim 1, wherein the decorative sheet is used for a decorative member;
the decorative member includes a base member and the decorative sheet; and
the decorative member is an exterior member.

3. The decorative sheet according to claim 2, wherein the base member includes a vinyl chloride based resin.

4. The decorative sheet according to claim 1, wherein the weatherproof layer includes the (meth)acrylic based resin as a main component of resin.

5. The decorative sheet according to claim 1, wherein, as the (meth)acrylic based resin, the weatherproof layer includes at least one type of polymethyl(meth)acrylate, polyethyl(meth)acrylate, polybutyl(meth)acrylate, methyl(meth)acrylate-butyl(meth)acrylate copolymer, methyl(meth)acrylate-styrene copolymer, methyl(meth)acrylate-butyl(meth)acrylate-2-hydroxyethyl(meth)acrylate copolymer, and methyl(meth)acrylate-butyl (meth)acrylate-2-hydroxyethyl(meth)acrylate-styrene copolymer.

6. The decorative sheet according to claim 1, wherein a thickness of the weatherproof layer is 100 µm or less.

7. The decorative sheet according to claim 1, wherein the decorative sheet includes a design layer between the substrate layer and the weatherproof layer.

8. The decorative sheet according to claim 1, wherein the surface protective layer includes a cured product of an ionizing radiation curable resin composition.

9. The decorative sheet according to claim 8, wherein the ionizing radiation curable resin composition is an electron beam curable resin composition.

10. A decorative member comprising:
a base member; and
the decorative sheet according to any one of claims 1 to 9.

11. The decorative member according to claim 10, wherein the decorative member is an exterior member.

12. The decorative member according to claim 10, wherein the base member includes a vinyl chloride based resin.
